# EUROPEAN PATENT SPECIFICATION

(11) **EP 1 264 869 B1**
(45) Date of publication and mention of the grant of the patent: **28.02.2007**
(21) Application number: 02012312.1
(22) Date of filing: 04.06.2002
(51) Int. Cl.: C09D 163/00, C09D 133/02, B65D 1/00, C09D 171/00, C09D 161/06

(54) **Metal container**
Metallbehälter
Conteneur métallique

(30) Priority: 07.06.2001 JP 2001172773
(43) Date of publication of application: 11.12.2002
(73) Proprietor: SUNTORY LIMITED, Kita-ku, Osaka-shi, Osaka (JP)
(72) Inventor: Ueda, Toshihiro, Ibaraki-shi, Osaka (JP); Kamishinbara, Towa, Minoo-shi, Osaka (JP); Miyama, Susumu, Oyama-cho, Sunto-gun, Shizuoka-ken (JP); Masuda, Tetsuya, Oyama-cho, Sunto-gun, Shizuoka-ken (JP)
(74) Representative: HOFFMANN EITLE

(56) References cited:
- EP-A- 0 428 316
- GB-A- 2 273 933
- US-A- 5 387 625
- US-A- 5 767 175
- DATABASE WPI Section Ch, Week 199425 Derwent Publications Ltd., London, GB; Class A21, AN 1994-206760 XP002253424 & JP 06 145593 A (TOYO INK MFG CO), 24 May 1994 (1994-05-24)

## Description

### BACKGROUND OF THE INVENTION

### Field of the Invention

The present invention relates to a metal container of which the interior surface thereof is coated with a resin composition, and more particularly, to a metal container for beverages of which the interior surface is coated with a resin composition without containing polyvinyl chloride, that has superior gas barrier properties, corrosion resistance, alcohol resistance and heat resistance, and does not cause deterioration of the beverage quality or flavor.

### Description of the Related Art

Metal containers are used extremely frequently as beverage containers because of their superior sealing properties and protection of light, water, and gases, etc. from the outside, their rapid filling speed, and their light weight and convenience in handling during transport. The interior surface of these metal beverage containers is coated with a resin composition to prevent effects caused by contact between the metal and the beverage inside.

On the other hand, a wide range of beverages are filled into metal beverage containers, including soft drinks and non-alcoholic beverages such as carbonated beverages, fruit juice and fruit beverages, milk beverages, mineral water, tea, green tea and oolong tea and other tea drinks and coffee and coffee drinks, as well as alcoholic beverages such as beer, rice wine, wine, liqueurs, molt liquor and other alcoholic beverages. There are also many beverages that require hot packing and sterilization in the manner of low acidity beverages (neutral beverages) such as coffee or coffee drinks and cocoa drinks that contain milk or milk products as well as soup-based beverages. Moreover, since there are also many beverages that are sold hot, the quality and aptitudes required of metal beverage containers are becoming increasingly diversified and sophisticated.

Examples of the above resin composition used in the prior art include resin compositions in which epoxy resin is allowed to react with phenol resin or amino resin, and resin compositions in which a resin containing a carboxyl group is introduced into an epoxy resin as described in Japanese Unexamined Patent Application, First Publication No. 53-1228 and Japanese Unexamined Patent Application, First Publication No. 55-3481. However, since these resin compositions have inferior corrosion resistance and gas barrier properties, and exhibit a high degree of sorption of flavoring ingredients, resin compositions comprising a copolymer of epoxy resin and acrylic resin, polyvinyl chloride and phenol resin have been proposed as improvements of these metal beverage containers as disclosed in Japanese Unexamined Patent Application, First Publication No. 7-232737.

The above resin compositions of the prior art have the disadvantages described below. Namely, resin compositions in which epoxy resin is allowed to react with phenol resin and amino resin, and resin compositions in which a resin containing a carboxyl group is introduced into epoxy resin, have inferior corrosion resistance and gas barrier properties, and have the problem of a high degree of sorption of the flavoring ingredients. In the case these resin compositions in particular, due to their inferior gas barrier properties with respect to gases such as the sulfurous acid gas (SO₂) contained in wine beverages, when wine is filled into a container coated with such a resin composition, the sulfurous acid gas contained in the wine beverage passes through the coated film and has the risk of corroding the underlying metal surface and resultingly, leakage of contents may occur. Furthermore, hydrogen sulfide (H₂S) is generated in the case this sulfurous acid gas reacts with the underlying metal. This hydrogen sulfide not only cause foul odors, but also deteriorate the quality of the wine beverage impair flavor as a result of consuming the sulfurous acid gas which is required to maintain the quality of the wine beverage. In addition, since this resin composition also easily sorbs the flavoring ingredients which characterize the flavor of the beverage, there have been no resin compositions for satisfyingly coating the interior surface of metal beverage containers. Deterioration of flavor is particularly remarkable in the case of filling liqueur-based alcoholic beverages (cocktails) that contain alcohol and lipophilic flavoring ingredients since the resin composition easily sorbs the flavoring ingredients of the contents.

On the other hand, the resin composition comprising a copolymer of epoxy resin and acrylic resin, polyvinyl chloride and phenol resin disclosed in Japanese Unexamined Patent Application, First Publication No. 7-232737 has superior gas barrier properties when coated onto the interior surface of a metal container, prevents corrosion of the container by sulfurous acid gas, and has superior flavor aptitude without sorbing the flavoring ingredients. However, in the case of using this resin composition as a can drum coating, when bending processing is performed on the metal to join the can end with the can drum by wrapping over the edge of the can drum and fastening, cracks tend to easily form in the coated film, and in the case of filling with beverages which are highly corrosive to metal such as those having a low pH, the portions of the metal below the cracks are corroded and resultingly, leakage of the beverage may occur. Furthermore, this resin composition contains vinyl chloride, and in consideration of the growing awareness of the environment in recent years and the trend towards the elimination of vinyl chloride from all forms of synthetic resin products, it has been desired to substitute this with a resin composition that does not contain halogen as quickly as possible.

### SUMMARY OF THE INVENTION

In consideration of the above circumstances, the object of the invention is to provide a resin composition that has superior gas barrier properties, prevents corrosion of a container by sulfurous acid gas contained in the beverage, has superior flavor aptitude as a result of minimal sorption of flavoring ingredients, and is free of vinyl chloride, a metal container of which the interior surface thereof is coated with this resin composition, and particularly a metal container for beverages.

In order to achieve the above object, the present invention provides a metal container of which the interior surface is coated with a resin composition, the resin composition comprising: epoxy acrylic copolymer (a) formed by copolymerizing acrylic resin (A) and epoxy resin (B) at a weight ratio (A)/(B) within the range of 12/88 to 35/65 (provided that, the acrylic resin (A) is composed of 30-60 wt% methacrylic acid, 35-70 wt% styrene and 0-20 wt% of copolymerizing monomer which may be arbitrarily contained, and the epoxy resin (B) contains 5-45 wt% of phenoxy resin), and 1-7 parts by weight of phenol resin (b) to 100 parts by weight of the epoxy acrylic copolymer (a).

Since the metal container of the present invention has superior gas barrier properties, corrosion resistance, alcohol resistance and heat resistance, and exhibits low sorption of the flavoring ingredients, the metal container can be preferably used as a metal container for beverages. In particular, the metal container for beverages of the present invention can be preferably used as a metal container for alcoholic beverages, a metal container for beverages containing sulfurous acid, or a metal container for beverages containing flavoring ingredients because of its superior performance.

### BRIEF DESCRIPTION OF THE DRAWINGS

FIG. 1 is a front view for explaining the method of a test for evaluating corrosion resistance in the examples.
FIG. 2 is a graph representing the results of a flavor sorption test in the examples.

### BRIEF DESCRIPTION OF THE PREFERRED EMBODIMENTS

A preferred embodiment of the present invention will be explained below.

The resin composition as claimed in the present invention is comprised of an epoxy acrylic copolymer (a) that is formed by copolymerizing acrylic resin (A) and epoxy resin (B) at a weight ratio (A)/(B) within the range of 12/88 to 35/65, and 1-7 parts by weight of a phenol resin (b) to 100 parts by weight of this epoxy acrylic copolymer (a). This resin composition is made to be uniform by dissolving or emulsifying in a hydrophilic solvent having water for its main component, coating onto the interior surface of a container by spraying or roll coating and then cured by heating to form a coated film on the interior surface of said metal container. Coating provided by this resin composition is formed on the interior surface of a metal container, and particularly formed on the portion which makes contact with the beverage inside, however, the effects of the present invention can be adequately demonstrated if the resin composition is coated onto the interior surface of a can drum. Examples of metal materials of the above metal container that are used preferably include aluminum, steel, tin chrome-plated steel and metal materials that combine these metal materials.

Epoxy resin (B) used in the present invention is a mixture of epoxy resin (i) having a mean molecular weight Mw of 8000-30000, and phenoxy resin (ii) having a mean molecular weight Mw of 30000-65000 (high molecular weight epoxy resin). Both epoxy resin (i) having a mean molecular weight Mw of 8000-30000 and phenoxy resin (ii) having a mean molecular weight Mw of 30000-65000 are derived mainly from diglycidyl ether of bisphenol A and bisphenol A. Although there are no particular restrictions on the number of epoxy groups per molecule of epoxy resin (B), the mean number is preferably within the range of 0.8-1.7.

The content of phenoxy resin (ii) in this epoxy resin (B) is within the range of 5-45 wt%, more preferably within the range of 10-40 wt%, and even more preferably within the range of 15-35 wt%. If the content of phenoxy resin (ii) is less than 5 wt%, both fabricability and corrosion resistance are inadequate, while if the content exceeds 45 wt%, viscosity during coating production becomes remarkably high, making it difficult to produce the coating.

The monomer used in synthesizing acrylic resin (A) used in the present invention is composed of a monomer consisting of the essential components of:
(a) methacrylic acid at 30-60 wt% (relative to the entire monomer), preferably 35-55 wt%, and more preferably 40-60 wt%,
(b) styrene at 35-70 wt%, preferably 40-65 wt%, and more preferably 45-60 wt%, and
(c) copolymerizing monomer at 0-20 wt% as the arbitrary component,

Among the monomers in the form of the above essential components, if the content of methacrylic acid (a) is less than 30 wt%, the emulsibility of the finished resin composition in water decreases, which together with impairing the stability of the coating, also reduces the total amount of carboxyl groups which contribute to adhesion to the underlying metal, and as a result, fabricability is decreased. In addition, if the content of methacrylic acid (a) exceeds 60 wt%, the coating is susceptible to swelling with respect to the beverage, and corrosion resistance is decreased. In particular, remarkable corrosion may occur when the beverage containing alcohol having a pH of less than 3.5.

If the content of styrene (b) is less than 35 wt%, the rigidity of the coated film becomes inadequate, which is undesirable since the coating is susceptible to damage by the metal mold during fabricating. In addition, if the content of styrene (b) exceeds 70 wt%, since this inevitably makes the amount of methacrylic acid (a) less than 30 wt%, adhesion to the underlying metal decreases.

Examples of the above copolymerizing monomer (c) in the form of an arbitrary component include acrylate esters such as methyl acrylate, ethyl acrylate, propyl acrylate, isopropyl acrylate, n-butyl acrylate and isobutyl acrylate, methacrylate esters such as methyl methacrylate, ethyl methacrylate, propyl methacrylate, n-butyl methacrylate and isobutyl methacrylate, styrene-based monomers such as vinyltoluene, 2-methylstyrene and t-butylstyrene, hydroxyl group-containing monomers such as hydroxyethyl acrylate, hydroxypropyl acrylate, hydroxymethyl methacrylate and hydroxypropyl methacrylate, acrylonitrile and various other monomers, and one kind or two or more kinds of these monomers can be used, although ethyl acrylate is used preferably.

The epoxy acrylic copolymer (a) that serves as the main component of the resin composition as claimed in the present invention is obtained by copolymerizing the above acrylic resin (A) and epoxy resin (B) at a weight ratio (A)/(B) of 12/88 to 35/65. Ordinary methods are used to obtain this copolymer (a), examples of which include:
1. a method in which copolymer is obtained by polymerizing the monomer serving as the raw material of the acrylic resin in advance to prepare acrylic resin (A), followed by reacting this acrylic resin (A) with the terminal of epoxy resin (B) (esterification method); and,
2. a method in which the monomer serving as the raw material of acrylic resin (A) is dropped into epoxy resin (B) dissolved in a solvent along with a polymerization catalyst such as benzoyl peroxide to perform grafting (grafting method).

The weight ratio (A)/(B) of acrylic resin (A) and epoxy resin (B) is preferably within the range of 12/88 to 35/65. If ratio (A)/(B) of acrylic resin (A) is less than 12/88, the emulsificated form of the resin becomes unstable in an aqueous dispersion medium at the above monomer ratio of acrylic resin (A), thereby preventing the obtaining of a resin composition suitable for coating. In addition, if ratio (A)/(B) of acrylic resin (A) exceeds 35/65, the fabricability, corrosion resistance and so forth of the finished resin composition decrease.

Phenol resin (b) used in the present invention has a mean molecular weight Mw of about 300-1000. Preferable examples of the reaction system include that which forms a thermocured resol by reacting phenol with formaldehyde, and that in which bisphenol A is reacted with formalin. In addition, the mononuclide (which having a single benzene ring) content of this phenol resin is preferably 5 wt% or less. If the mononuclide content exceeds 5 wt%, extraction from the coated film increases even if the mixing ratio with epoxy acrylic copolymer (a) is within the range of the present invention, and functional problems may occur in the contents. The reason for limiting the amount of said phenol resin (b) added to 1-7 parts by weight relative to 100 parts by weight of epoxy acrylic copolymer (a) is that if the added amount is less than 1 part by weight, adhesion of the resin composition to the underlying metal is unable to be adequately obtained, while if phenol resin (b) is added in excess of 7 parts by weight, the hardness of the coated film increases excessively making it brittle, thereby increasing the susceptibility to the formation of cracks in the coated film during fabricating or when subjected to impacts.

In this manner, since the metal container as claimed in the present invention that is coated on its interior surface with the above resin composition has improved gas barrier properties, corrosion resistance and alcohol resistance, and there is little sorption of the flavoring ingredients of the contents, deterioration of the flavor of the contents can be prevented. Moreover, since the above metal container has superior heat resistance, there is little deterioration of flavor during high-temperature sterilization or when stored while heating for an extended period of time.

Consequently, the metal container according to the present invention is suitable for filling with, for example, alcoholic beverages such as liqueurs that contain large amounts of flavoring ingredients, wines that contain sulfurous oxide gas (SO₂), various types of low acidity beverages requiring heat treatment, and beverages provided for consumption in a heated state, and the beverages filled into the metal container suffer no impairment of quality or flavor even after the passage of an extended period of time. Moreover, although the metal container as claimed in the present invention is developed for use with beverages, since it demonstrates the effects as described above, it can also be preferably used as a metal container for all types of foods.

### (Examples 1-12)

Resin compositions having the compositions shown in Examples 1-12 of the present invention in Tables 1 and 2 were prepared, each resin composition was coated onto a 3004 aluminum material that underwent zirconium surface treatment with a bar coater to a film weight of 60 mg/dm2 followed by baking for 60 seconds at 200°C to obtain coated plates for evaluation (Examples 1-12).

### (Commercial Coatings A and B)

Two types of commercially available coatings for spraying coating of two-piece can drums having for their main component epoxy acrylic copolymer made by Company A and Company B were coated onto the same aluminum material and then baked to obtain coated plates (Commercial Coatings A and B) used for comparison.

### (Comparative Examples 1-8)

Resin compositions of Comparative Examples 1-8, which contain the same resin components as the resin compositions of the present invention, but for which the blended amounts of any of the resin components exceed the range of the present invention, were prepared as shown in Table 3, coated onto the same aluminum material of Examples 1-12 and then baked to obtain coated plates (Comparative Examples 1-8) used for comparison.

The evaluation tests of Evaluations 1-7 described below were carried out using the respective coated plates of the above-mentioned Examples 1-12, Commercial Coatings A and B, and Comparative Examples 1-8.

### Evaluation 1: Corrosion Resistance

| An evaluation solution 2 having the following composition: | |
|---|---|
| Potassium metabisulfite | 1 wt% |
| Citric acid | 1 wt% |
| Sodium chloride | 3 wt% |
| Ethanol | 10 wt% |
| Purified water | 85 wt% |

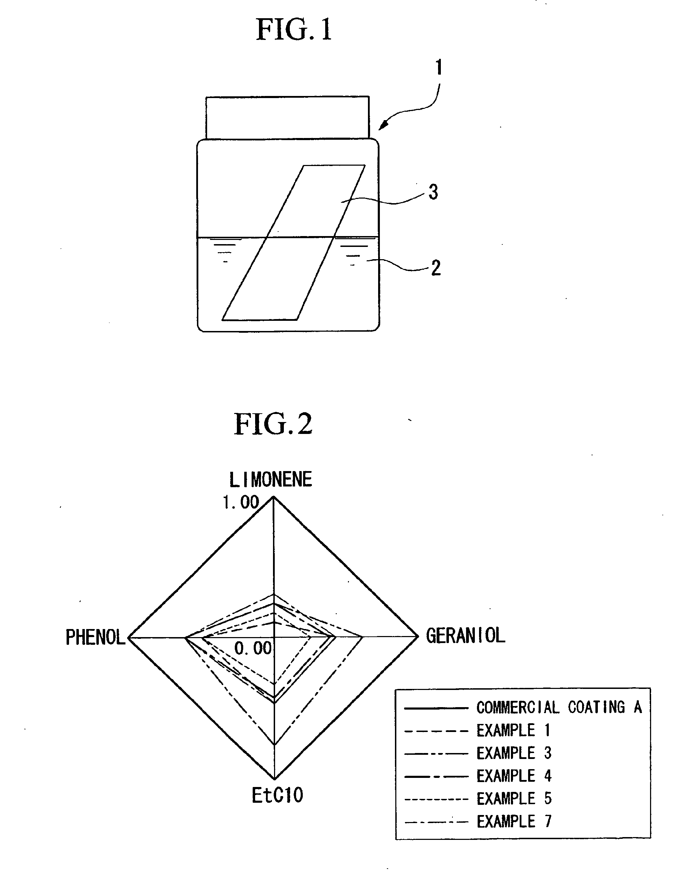

was placed in a wide-mouth bottle 1 as shown in FIG. 1 followed by immersion of each coated plate 3 and visually evaluating the state of corrosion after storing for 5 days at 40°C. The results are shown in Tables 1 through 3. This evaluation allows evaluation of the corrosion resistance to a wide range of alcoholic beverages such as liqueurs having a low pH (cocktails) and wines containing SO₂. The evaluation standards were as indicated below.
○: Hardly any corrosion observed
Δ: Occurrence of corrosion at vapor phase portions, but only slight occurrence of corrosion at liquid phase portions
× : Remarkable corrosion at both liquid phase and vapor phase portions

Evaluation results of Δ or ○ were interpreted as indicating that the level of corrosion resistance has reached a satisfactory level.

### Evaluation 2: Fabricability

The above coated plates were cut to a prescribed width, the surface to be evaluated was positioned on the outside, and while sandwiched about an aluminum plate having a thickness of 0.9 mm, were bent by dropping a 3 kg weight from a height of 40 cm. Subsequently, ERV of the portion at which this bending was performed was measured. The ERV refers to the amount of current that flows in the case of applying a voltage of 6.2 V through a 1 wt% aqueous NaCl solution. If the ERV is high, cracks form easily in the case of wrapping the can end over the can drum and fastening, or in the case of the coated film being subjected to an impact and so forth. The results are shown in Tables 1 through 3. With this evaluation method, fabricability can be judged to be satisfactory in terms of practical use if the ERV is 1 mA or less.

### Evaluation 3: Amount of Extraction from Coated Film

Each coated plate was cut to a size of 10 cm × 10 cm and immersed in 100 ml of distilled water followed by performing retorting for 30 minutes at 125°C. The solution obtained in this manner was evaluated according to the potassium permanganate consumption test described in "The Ministry of Health and Welfare Notification No. 20, General Testing Methods for Utensils or Container Packaging". The results are shown in Tables 1 through 3. Poor taste caused by extracted substances is judged not to occur if the amount of potassium permanganate consumption is 5 ppm or less.

**Table 1**

| | Ex. 1 | Ex. 2 | Ex. 3 | Ex. 4 | Ex. 5 | Ex. 6 | Ex. 7 |
|---|---|---|---|---|---|---|---|
| Weight ratio of acrylic resin (A)/epoxy resin (B) | 20/80 | 20/80 | 20/80 | 20/80 | 20/80 | 20/80 | 15/85 |
| Phenoxy resin content in epoxy resin (B) (wt%) | 20 | 30 | 40 | 30 | 20 | 20 | 27 |
| Monomer composition in acrylic resin (A) | | | | | | | |
| (a) Methacrylic acid content (wt%) | 45 | 45 | 45 | 45 | 50 | 30 | 50 |
| (b) Styrene content (wt%) | 45 | 45 | 45 | 45 | 50 | 70 | 50 |
| (c) Other monomer (EA = ethyl acrylate) content (wt%) | EA 10 | EA 10 | EA 10 | EA 10 | 0 | 0 | 0 |
| Amount of phenol resin (b) (parts by weight to 100 parts by weight of epoxy acrylic copolymer (a) | 5 | 5 | 5 | 5 | 5 | 5 | 5 |

| (Test Results) | | | | | | | |
|---|---|---|---|---|---|---|---|
| Corrosion resistance evaluation results | ○ | Δ∼○ | Δ∼○ | ○ | ○ | Δ∼○ | ○ |
| Fabricability evaluation results ERV (mA) | 0.5 | 0.7 | 0.7 | 0.7 | 0.7 | 0.3 | 0.9 |
| Coated film extraction evaluation results Amount of potassium permanganate consumption (ppm) | 2.6 | 3.1 | 2.9 | 2.8 | 2.9 | 4.6 | 2.7 |

**Table 2**

| | Ex. 8 | Ex. 9 | Ex. 10 | Ex. 11 | Ex. 12 | Comm . coat. (A) | Comm .coat. (B) |
|---|---|---|---|---|---|---|---|
| Weight ratio of acrylic resin (A)/epoxy resin (B) | 20/80 | 33/67 | 30/70 | 30/70 | 30/70 | - | - |
| Phenoxy resin content in epoxy resin (B) (wt%) | 6 | 20 | 30 | 30 | 20 | - | - |
| Monomer composition in acrylic resin (A) | | | | | | | |
| (a) Methacrylic acid content (wt%) | 45 | 40 | 45 | 45 | 65 | - | - |
| (b) Styrene content (wt%) | 45 | 40 | 45 | 45 | 35 | - | - |
| (c) Other monomer (EA = ethyl acrylate) content (wt%) | EA 10 | EA 20 | EA 10 | EA 10 | 0 | - | - |
| Amount of phenol resin (b) (parts by weight to 100 parts by weight of epoxy acrylic copolymer (a) | 5 | 5 | 1.5 | 6.5 | 5 | - | - |

| (Test Results) | | | | | | | |
|---|---|---|---|---|---|---|---|
| Corrosion resistance evaluation results | Δ∼○ | ○ | Δ∼○ | Δ∼○ | Δ∼○ | × | × |
| Fabricability evaluation results ERV (mA) | 0.4 | 0.9 | 0.7 | 0.9 | 0.4 | 0.8 | 1.2 |
| Coated film extraction evaluation results Amount of potassium permanganate consumption (ppm) | 1.2 | 4.8 | 2.7 | 2.4 | 2.9 | 2.7 | 3.1 |

**Table 3**

| | Comp Ex.1 | Comp Ex.2 | Comp Ex.3 | Comp Ex.4 | Comp Ex.5 | Comp Ex.6 | Comp Ex.7 | Comp Ex.8 |
|---|---|---|---|---|---|---|---|---|
| Weight ratio of acrylic resin (A)/epoxy resin (B) | 20/80 | 50/50 | 40/60 | 10/90 | 20/80 | 20/80 | 20/80 | 20/80 |
| Phenoxy resin content in epoxy resin (B) (wt%) | 3 | 50 | 20 | 20 | 20 | 30 | 20 | 20 |
| Monomer Composition in acrylic resin (A) | | | | | | | | |
| (a) Methacrylic acid Content (wt%) | 45 | 45 | 70 | 45 | 70 | 25 | 45 | 70 |
| (b) Styrene content (wt%) | 45 | 45 | 30 | 45 | 30 | 75 | 45 | 30 |
| (c) Other monomer (EA = ethylacrylate) content (wt%) | EA 10 | EA 10 | 0 | EA 10 | 0 | 0 | EA 10 | 0 |
| Amount of phenol resin (b) (parts by weight to 100 parts by weight of epoxy acrylic copolymer (a) | 5 | 5 | 5 | 5 | 2 | 5 | 0.5 | 8 |

| (Test Results) | | | | | | | | |
|---|---|---|---|---|---|---|---|---|
| Corrosion resistance evaluation results | ×∼ Δ | N/A | Δ | N/A | Δ | ×∼ Δ | ×∼ Δ | Δ∼ ○ |
| Fabricability evaluation results ERV (mA) | 0.8 | - | 0.5 | - | 0.3 | 2.1 | 0.4 | 1.9 |
| Coated film extraction evaluation results Amount of potassium permanganate consumption (ppm) | 2.7 | - | 5.7 | - | 3.2 | 2.7 | 1.1 | 7.2 |
| N/A: Unable to produce coating. | | | | | | | | |

As can be understood from Tables 1 through 3, the coated plates of Examples 1-12 as claimed in the present invention have superior corrosion resistance and fabricability, and have lower amounts of extracted substances from the coated film as compared with each of the coated plates of Commercial Coatings A and B as well as Comparative Examples 1-8.

### Evaluation 4: Flavor Evaluation

The resin compositions indicated in Examples 5 and 7 in Table 1 were coated onto the interior surface of a metal can and baked followed by filling the metal cans with purified water and 10% aqueous ethanol solution, sealing the cans by wrapping a can end around the top of the can drums and fastening, and retorting each metal can for 30 minutes at 125°C. Following retorting, each can was opened and the contents were subjected to flavor evaluations for the presence of abnormal taste or abnormal odor. As a result, there was no abnormal taste or abnormal odor detected.

### Evaluation 5: Flavor Sorption Test

The resin compositions indicated in Commercial Coating A and Examples 1, 3, 4, 5 and 7 shown in Tables 1 and 2 were coated, baked and then cut into respective coated plates measuring 5 cm × 10 cm.

Four compounds having different polarities (limonene, geraniol, ethyl decanoate (abbreviated as EtC10) and phenol) were selected as typical examples of flavoring ingredients contained in each type of beverage. Each coated plate was immersed in flavoring ingredient aqueous solutions containing fixed amounts of these four types of flavoring ingredients for a fixed period of time followed by extraction of each flavoring ingredient from the coated film that had been sorbed into the coated film and quantitative analysis of that amount by gas chromatography. The relative sorbed amount of each coating of Examples 1, 3, 4, 5 and 7 was determined based on assigning a value of 1.00 to the amount sorbed into Commercial Coating A, an ordinary epoxy acrylic resin. Those results are shown in Table 4 and FIG. 2.

**Table 4**

| | Commercial coating A | Examples | | | | |
|---|---|---|---|---|---|---|
| | | 1 | 3 | 4 | 5 | 7 |
| Limonene | 1.00 | 0.12 | 0.24 | 0.24 | 0.17 | 0.29 |
| Geraniol | 1.00 | 0.43 | 0.61 | 0.39 | 0.26 | 0.43 |
| EtC10 | 1.00 | 0.48 | 0.76 | 0.43 | 0.33 | 0.48 |
| Phenol | 1.00 | 0.50 | 0.60 | 0.60 | 0.50 | 0.60 |

As can be understood from Table 4 and FIG. 2, the adsorbed amounts of flavoring ingredients for the coatings of Examples 1, 3, 4, 5 and 7 as claimed in the present invention were lower than that of Commercial Coating A for all of the above four compounds having different polarities. Thus, the use of the metal container of the present invention demonstrated that the degree of occurrence of changes in flavor accompanying flavor weakening and changes in flavor balance due to sorption of the flavor of the contents by the coating can be decreased.

### Evaluation 6: Alcohol Resistance Evaluation Test

A 10% alcohol aqueous solution, for which the pH was adjusted to 2.0 with citric acid and to which chlorine ion was added at 100 ppm, was filled and sealed in cans (140 mg/350 ml cans, min. film thickness: 2.5 µm) coated with the resin compositions indicated for Commercial Coatings A and B as well as Examples 1, 3, 4, 5 and 7 shown in Tables 1 and 2, and then stored for 1 month at 37°C. After storage, the amount of eluted aluminum (Al elution (ppm)) and corrosion state were investigated for each can. Those results are shown in Table 5.

**Table 5**

| | A | B | 1 | 3 | 4 | 5 | 7 |
|---|---|---|---|---|---|---|---|
| Amt. of A1 elution (ppm) | 0.12 | 0.18 | 0.03 | 0.02 | 0.04 | 0.03 | 0.04 |
| Corrosion state | Corrosion marks occur | Corrosion marks occur | ○ | ○ | ○ | ○ | ○ |

As can be understood from Table 5, the metal can as claimed in the present invention demonstrated superior corrosion resistance relative to a solution containing alcohol as compared with Commercial Coatings A and B.

### Evaluation 7: Heat Resistance Evaluation Test

Oolong tea was filled and sealed in cans (140 mg/350 ml, min. film thickness: 2.5 µm) coated with the resin compositions indicated for Commercial Coatings A and B as well as Example 5 shown in Tables 1 and 2, and stored for 1 month at 55°C. After storage, the flavor the contents of each can was compared by a sensory test. The evaluation standards consisted of ○: no change in flavor, Δ: some change in flavor, and × : change in flavor. The results were as shown below.
Commercial coating A: ×
Commercial coating B: Δ
Example 5: ○

According to the present invention, a metal container for beverages can be provided of which the interior surface is coated with a resin composition that has superior gas barrier properties, eliminates corrosion of the container by sulfurous acid gas, has superior flavor aptitude with little sorption of flavor, and does not contain vinyl chloride.

## Claims

1. A metal container of which the interior surface is coated with a resin composition, said resin composition comprising: epoxy acrylic copolymer (a) formed by copolymerizing acrylic resin (A) and epoxy resin (B) at a weight ratio (A)/(B) within the range of 12/88 to 35/65 (provided that, said acrylic resin (A) is composed of 30-60 wt% methacrylic acid, 35-70 wt% styrene and 0-20 wt% of copolymerizing monomer which may be arbitrarily contained, and said epoxy resin (B) contains 5-45 wt% of phenoxy resin), and 1-7 parts by weight of phenol resin (b) to 100 parts by weight of said epoxy acrylic copolymer (a).

2. A metal container according to claim 1 that is for a beverage.

3. A metal container according to claim 2 wherein, the beverage is an alcoholic beverage.

4. A metal container according to claim 2 wherein, the beverage is a beverage containing sulfurous acid.

5. A metal container according to claim 3 wherein, the beverage is a beverage containing sulfurous acid.

6. A metal container according to any of claims 2 through 5 wherein, the beverage is a beverage containing a flavoring ingredient.

7. A metal container according to any of claims 2 through 5 wherein, the beverage is a beverage that is consumed by heating while still in a container.

8. A metal container according to claim 6 wherein, the beverage is a beverage that is consumed by heating while still in a container.

## Patentansprüche

1. Metallbehälter, dessen Innenoberfläche mit einer Harzzusammensetzung beschichtet ist, wobei die Harzzusammensetzung umfasst: ein Epoxyacrylsäurecopolymer (a) gebildet durch die Copolymerisation von Acrylharz (A) und Epoxyharz (B) in einem Gewichtsverhältnis (A)/(B) innerhalb des Bereichs von 12/88 bis 35/65 (unter der Voraussetzung, dass das Acrylharz (A) aus 30 bis 60 Gew.-% Methacrylsäure, 35 bis 70 Gew.-% Styrol und 0 bis 20 Gew.-% eines copolymerisierenden Monomers besteht, das beliebig enthalten sein kann, und das Epoxyharz (B) 5 bis 45 Gew.-% Phenoxyharz enthält) und 1 bis 7 Gewichtsteile Phenolharz (b) auf 100 Gewichtsteile des Epoxyacrylsäurecopolymers (a).

2. Metallbehälter gemäß Anspruch 1, der einer für ein Getränk ist.

3. Metallbehälter gemäß Anspruch 2, wobei das Getränk ein alkoholisches Getränk ist.

4. Metallbehälter gemäß Anspruch 2, wobei das Getränk ein Getränk enthaltend schwefelige Säure ist.

5. Metallbehälter gemäß Anspruch 3, wobei das Getränk ein Getränk enthaltend schwefelige Säure ist.

6. Metallbehälter gemäß einem der Ansprüche 2 bis 5, wobei das Getränk ein Getränk enthaltend einen Geschmacksstoff ist.

7. Metallbehälter gemäß einem der Ansprüche 2 bis 5, wobei das Getränk ein Getränk ist, das nach Erwärmen, während es noch im Behälter ist, konsumiert wird.

8. Metallbehälter gemäß Anspruch 6, wobei das Getränk ein Getränk ist, das nach Erwärmen, während es noch im Behälter ist, konsumiert wird.

## Revendications

1. Conteneur métallique dont la surface intérieure est revêtue d'une composition de résine, ladite composition de résine comprenant : un copolymère époxy-acrylique (a) formé par copolymérisation d'une résine acrylique (A) et d'une résine époxy (B) dans un rapport en poids (A)/(B) dans la gamme de 12/88 à 35/65 (à condition que ladite résine acrylique (A) soit constituée de 30 - 60 % en poids d'acide méthacrylique, de 35 - 70 % en poids de styrène et de 0 - 20 % en poids d'un monomère de copolymérisation qui peut être arbitrairement présent, et que ladite résine époxy (B) contienne 5 - 45 % en poids de résine phénoxy), et 1 - 7 parties en poids de résine de phénol (b) pour 10C parties en poids dudit copolymère époxy-acrylique (a).

2. Conteneur métallique selon la revendication 1, qui est destiné à une boisson.

3. Conteneur métallique selon la revendication 2, dans lequel la boisson est une boisson alcoolique.

4. Conteneur métallique selon la revendication 2, dans lequel la boisson est une boisson contenant de l'acide sulfureux.

5. Conteneur métallique selon la revendication 3, dans lequel la boisson est une boisson contenant de l'acide sulfureux.

6. Conteneur métallique selon l'une quelconque des revendications 2 à 5, dans lequel la boisson est une boisson contenant un ingrédient aromatisant.

7. Conteneur métallique selon l'une quelconque des revendications 2 à 5, dans lequel la boisson est une boisson qui est consommée par chauffage alors qu'elle est encore dans le conteneur.

8. Conteneur métallique selon la revendication 6, dans lequel la boisson est une boisson qui est consommée par chauffage alors qu'elle est encore dans le conteneur.
